# EUROPEAN PATENT APPLICATION

(11) **EP 4 120 204 A1**
(43) Date of publication of application: **18.01.2023**
(21) Application number: 22184339.4
(22) Date of filing: 12.07.2022
(51) Int. Cl.: G06V 10/25, G06V 20/56, G06V 10/80

(54) **SENSOR FUSION ARCHITECTURE FOR LOW-LATENCY ACCURATE ROAD USER DETECTION**

(30) Priority: 12.07.2021 US 202117373358
(71) Applicant: Teraki GmbH, 10785 Berlin (DE)
(72) Inventor: BODNARIUC, Ecaterina, Berlin (DE); RENCKER, Lucas, Berlin (DE); RICHART, Daniel Lampert, Berlin (DE)
(74) Representative: Grünecker Patent- und Rechtsanwälte PartG mbB

(57) **Abstract**

Aspects described herein provide sensor data stream processing for enabling camera/radar sensor fusion, with application to road user detection in the context of Autonomous Driving/Assisted Driving (ADAS). In particular, a scheme to extract Region-of-Interests (ROI) from a high-resolution, high-dimensional radar data cube that can then be transmitted to a sensor fusion unit is described. The ROI scheme allows to extract relevant information, thus reducing the latency and data transmission rate to the sensor fusion module, without trading-off accuracy and detection rates. The sensor data stream processing comprises receiving a first data stream from a radar sensor, forming a point cloud by extracting 3D points from the 3D data cube, performing clustering on the point cloud in order to identify high-density regions representing one or ROIs, and extracting one or more 3D bounding boxes from the 3D data cube corresponding to the one or more ROIs and classifying each ROI.

## Description

### BACKGROUND

With the rise of remote and autonomic driving, the amount of image data which is streamed is ever increasing. In many cases, recording images by physical sensors, such as LIDAR, radar, camera, etc. is indispensable.

It is with respect to these and other general considerations that the aspects disclosed herein have been made. Also, although relatively specific problems may be discussed, it should be understood that the examples should not be limited to solving the specific problems identified in the background or elsewhere in this disclosure.

### SUMMARY

A computer-implemented method and system described herein provide sensor data processing. In exemplary embodiments, methods of enabling low level sensor fusion by lightweight semantic segmentation on sensors generating point cloud as generated from LIDAR, radar, cameras and Time-of-Flight sensors are described.

For example, a method for camera-radar sensor fusion, with application to road user detection in the context of Autonomous Driving/Assisted Driving (ADAS) is provided. More specifically, a scheme to extract Region-of-Interests (ROI) from a high-resolution, high-dimensional radar data cube is provided, that can then be transmitted to a sensor fusion unit.

According to the aspects disclosed herein, a computer-implemented method for sensor data stream processing comprises receiving a first data stream from a radar sensor, forming a point cloud by extracting 3D points from the 3D data cube, and extracting one or more 3D bounding boxes from the 3D data cube corresponding to the one or more ROIs and classifying each ROI. The first data stream comprises a 3D data cube including azimuth, range and velocity dimensions. Data of the 3D data cube that is not included in the one or more 3D bounding boxes is discarded after classification.

According to an embodiment the method further comprises sensor fusion with a camera sensor, comprising receiving a second data stream from the camera sensor, detecting objects within the image and determining one or more 2D bounding boxes for each detected object, projecting the one or more 3D bounding boxes from the 3D data cube onto the image, and matching said one or more 3D bounding boxes with said one or more 2D bounding boxes. The second data stream comprises an image including pixel values from the camera sensor.

According to an embodiment the method further comprises classifying a fused object once a matched pair of 2D and 3D bounding boxes is identified. Classifying uses features computed from the radar sensor and the camera sensor.

According to an embodiment, matching comprises computing an Intersection-Over-Union (IOU) between each 2D/3D bounding box pair, resulting in a matrix of pairwise IOUs, wherein a pair is a match if the IOU corresponding to the pair is greater than a threshold.

According to an embodiment, forming of the point cloud by extracting 3D points from the 3D data cube is performed by using a lightweight local maximum detector comprising a custom 3D Constant-False-Alarm-Rate, CFAR, algorithm that directly returns 3D points from the 3D data cube.

According to an embodiment, classifying comprises for each 3D bounding box, computing custom features utilizing a support vector machine, SVM, wherein said custom features comprise at least one of spatial shape, radar cross section, RCS, mean velocity and variance of velocity.

According to an embodiment, information from sensor fusion is used for running time of interest, TOI, models relying on low latency sensor data processing.

In further examples, a computer-readable medium and a sensor data processing system corresponding to the above embodiments are provided.

The above described embodiments can be combined with each other. The above described embodiments may also be implemented on a computer-readable medium comprising computer-readable instructions, that, when executed by a processor, cause the processor to perform the above described steps.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

Non-limiting and non-exhaustive examples are described with reference to the following figures.
Fig. 1 is a diagram illustrating a system comprising a vehicle, a corresponding camera, another vehicle and a cloud environment;
Fig. 2 illustrates an exemplary environment that may be dealt with a vehicle implementing the herein described concepts. The environment comprises an exemplary scene including a traffic sign, a pedestrian, a street, a vehicle, a cyclist, trees and sky;
Fig. 3A is an exemplary concept diagram for extracting 3D points from a 3D data cube and clustering the point cloud;

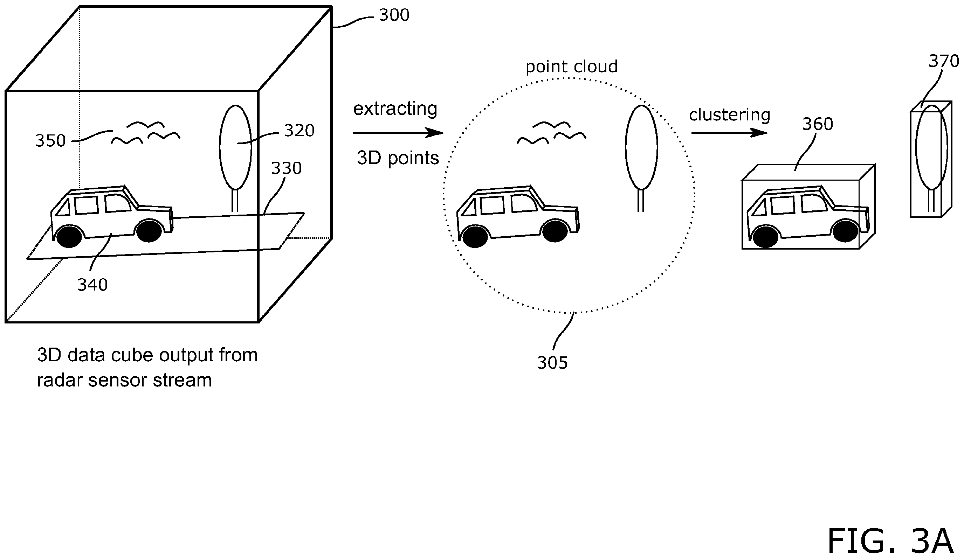

Fig. 3A is an exemplary concept diagram for sensor fusion;

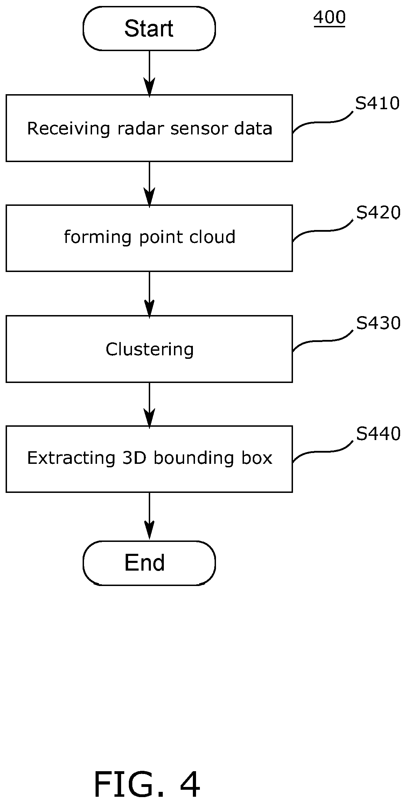

Fig. 4 is a flow diagram for a method of performing sensor data processing;

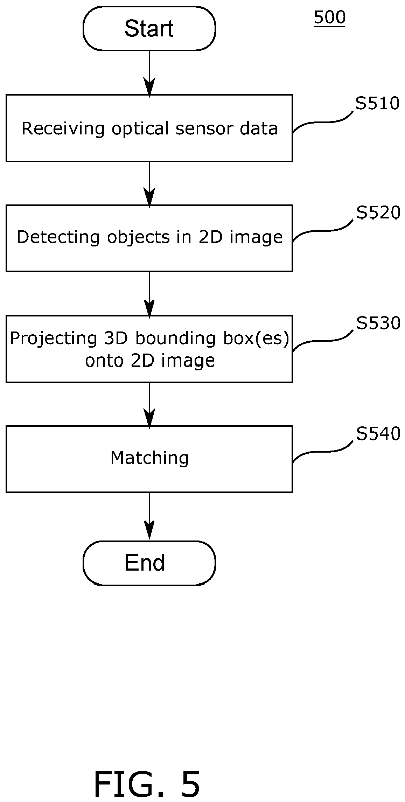

Fig. 5 is a flow diagram for a method of performing sensor fusion; and

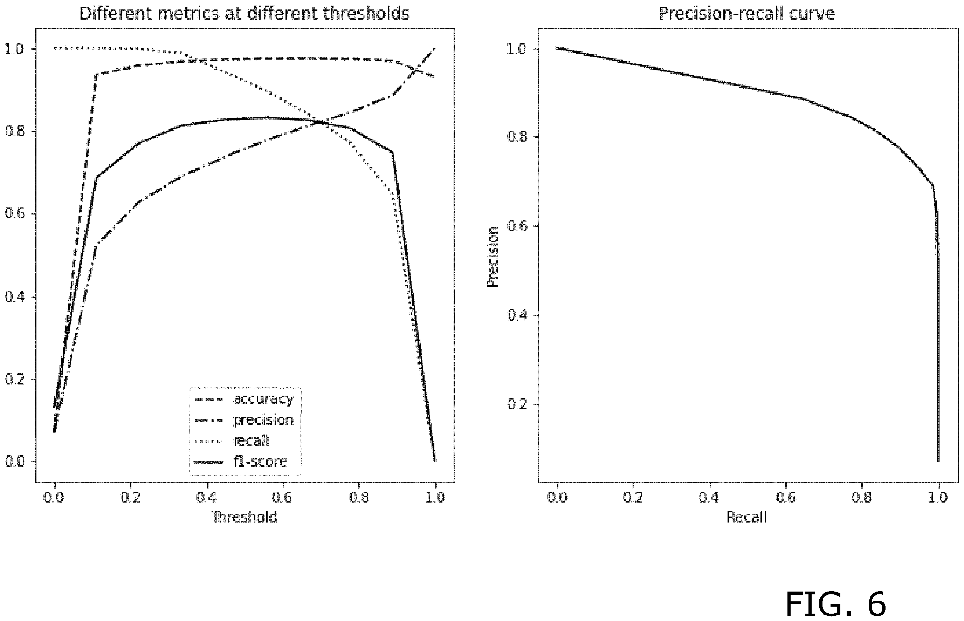

Fig. 6 shows various detection metrics for a radar object detector.

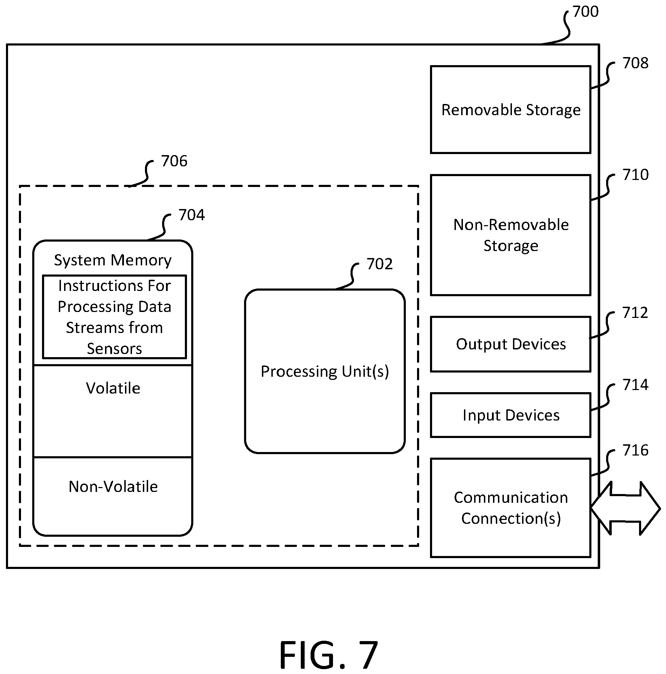

FIG. 7 is a block diagram illustrating example physical components of a computing device with which aspects of the disclosure may be practiced.

### DETAILED DESCRIPTION

Various aspects of the disclosure are described more fully below with reference to the accompanying drawings, which from a part hereof, and which show specific example aspects. However, different aspects of the disclosure may be implemented in many different ways and should not be construed as limited to the aspects set forth herein; rather, these aspects are provided so that this disclosure will be thorough and complete, and will fully convey the scope of the aspects to those skilled in the art. Aspects may be practiced as methods, systems or devices. Accordingly, aspects may take the form of a hardware implementation, an entirely software implementation or an implementation combining software and hardware aspects. The following detailed description is, therefore, not to be taken in a limiting sense.

Aspects of the present disclosure relate to systems and methods for processing data streams from different sensors of a vehicle. In particular, processing that is performed on images that are recorded by a radar and camera of a vehicle. With the rise of remote and autonomic driving, the amount of image data which is streamed is ever increasing. In many cases, recording images by physical sensors, such as LIDAR, radar, camera, etc. which are integrated into vehicles (or which can be removably attached to vehicles) is valuable.

The development of smart-mobility/ADAS systems require accurate and robust perception schemes, in order to sense the surrounding environment. In particular, detecting other road users such as cars, pedestrians, bicycles and others is of the utmost importance for many applications such as path planning, warning systems, emergency breaking etc.

Examples of such sensors include cameras, radars or LIDARs, each of those sensors having different advantages and limitations know to one of skill in the art. Cameras, for example, provide good lateral resolution and are able to sense color and texture information, which makes it ideal for object detection tasks. However, cameras only provide a 2D projection of a 3D world, and as such do not provide any range or distance information, and are not able to detect occluded objects.

Moreover, camera-based perception systems are not robust in bad weather conditions (fog, rain, snow), or low-light conditions (dark or night time). Radar systems on the other hand, work well in adverse environments (night, rain, fog), and provide range and velocity environments. However, radars suffer from a lower spatial resolution, and clutter/noise, which makes it more challenging to detect or classify small objects.

For increased performance, recent radar sensors now provide a high-resolution, high-dimensional 3D data cube, which allows more advanced object detection/classification algorithms to be run. The challenge with high-dimensional radars however is the increased data transmission and processing cost, and thus the increased latency.

These sensors produce high data rates. For example, high resolution cameras with 1080p and 4k resolution that produce large amounts of image data are commonly used. However, data transmission and especially data processing is limited by available bandwidth and processing power. This can render applications impossible, which rely on near or real-time image transmission/processing and reliable object detection.

Reference will now be made in detail to the exemplary embodiments, examples of which are illustrated in the accompanying drawings, therein like reference numerals reference to like elements throughout.

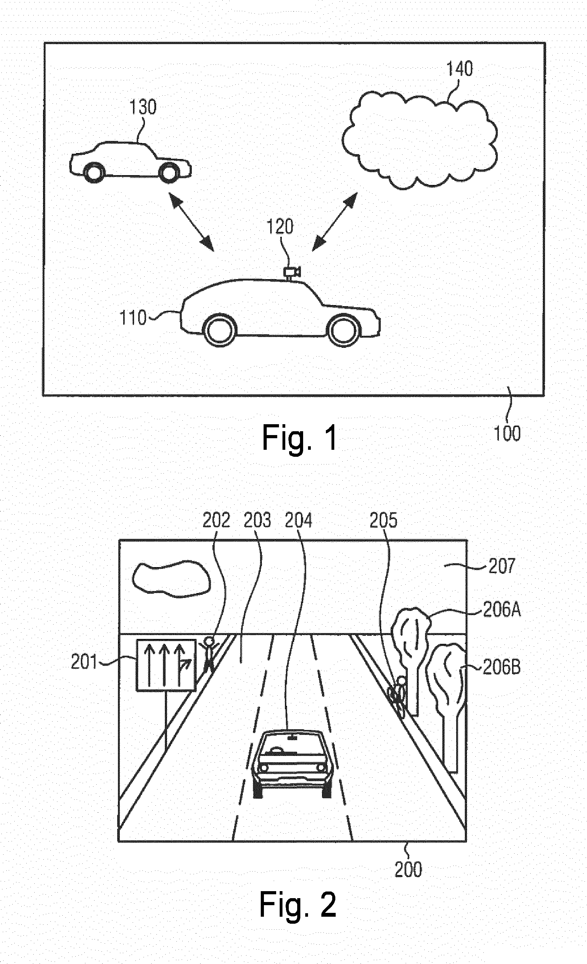

Fig. 1 illustrates a system 100 including a vehicle 110, a set of multiple sensors 120 of the vehicle 110, another vehicle 130, and a cloud environment 140. The set of multiple sensors 120 may include a camera, a LIDAR, a radar, a time-of-flight device and other sensors and devices that may be used for observing the environment of the vehicle 110.

The vehicle 110 may further comprise a processor configured to receive data from the multiple sensors 120 and to process the data before encoding the data. In one embodiment this data may be data from the radar sensor. The vehicle 110 may further comprise a memory for saving the encoded image. In addition, the vehicle 110 may further comprise an autonomous driving system that may be communicatively coupled to the processor of the vehicle and that may receive the encoded image.

The autonomous driving system may use the encoded data for autonomously driving the vehicle 110. The vehicle 110 may comprise one or more further sensors, such as a distance sensor and a temperature sensor. The vehicle 110 may be further communicatively coupled to another vehicle 130 and/or a cloud environment 140. The multiple sensors 120 may be integrated anywhere in the vehicle 110 (e.g., next to a headlight, a rearview mirror, etc.) or may comprise sensors that can be attached and removed from the vehicle 110.

The other vehicle 130 may also comprise different sensors (not shown) for observing the environment, a processor, a memory, and/or an autonomous driving system. Likewise, the processor of the other vehicle 130 may also be configured to process an image by filtering the image before encoding the image, as described herein. The cloud environment 140 may include a cloud storage for storing the encoded image. The cloud environment 140, may be communicatively coupled to a remote driving system that may be used to control the vehicle 110 from remote by a remote driver.

Fig. 2 illustrates an exemplary environment 200 that may exist around the vehicle 110. The environment 200 may comprise one or more objects. The exemplary environment 200 of Fig. 2 illustrates several regions 201 - 207 that display several objects including a traffic sign 201, a pedestrian 202, a street 203, a car 204, a cyclist 205, two trees 206A, 206B and sky 207. It is apparent that it may be possible to define more regions comprising further objects such as cyclist way, lane marker, or cloud which are also present in environment 200.

The environment 200 may be a representative environment with which aspects of the present disclosure may be confronted. In exemplary environment, the vehicle 110 is depicted as a car, however, aspects of the present disclosure is not limited to be implemented by cars, but can be employed with other systems, vehicles and devices may be used for implementing the herein disclosed concepts. Other examples of vehicles 110 may be a drone or a delivery robot.

Consequently, the environment 200 may look quite different based on the vehicle 110 implementing the herein disclosed concepts. For example, in case of a drone, the environment 200 may comprise other drones and obstacles in the air, such as birds, wind turbines, buildings, aircrafts, etc.

The herein disclosed techniques pertain to a concept of enabling low level sensor fusion by lightweight semantic segmentation on sensors generating point clouds as generated from LIDAR, radar, camera, and/or Time-of-Flight sensors when capturing/observing the environment 200. In this regard, Regions of Interest (ROIs) within the environment 200 are detected by the sensors 120, generating point clouds as data points in space and then using the point clouds to fuse with other sensor modalities such as cameras to enable real-time sensor fusion.

As previously described, different sensors have certain shortcomings. To overcome the shortcomings of individual sensors, a camera-radar based sensor fusion scheme is described herein, using high-dimensional camera and radars, while retaining the latency low enough to match safety requirements. Sensor fusion even in early warning system on a chip (SoC) (e.g., 1-5ms timeframe) and not only in the centralized device fusing the results from various camera/Radar detections along the car is currently an important topic of interest.

Aspects disclosed herein can provide an advantage over existing centralized sensor fusion schemes that require the fusion, for example, within a 100ms timeframe. According to a non-limiting example, an earlier trigger could already be triggered at the camera/radar SoC level tuning the required frame-rates of all camera/radar data streams.

According to the aspects described herein, transmission of 3D cubes for a radar/camera cube and performing centralized fusion of the 3D cubes, results in a reduction in computational requirements when centralized fusion is triggered. A further aspect is the ability to obtain outputs of the camera/radar sensor fusion stack and the corresponding locations of particular objects and thus the fusion of these (x,y,z) object tuples in the centralized sensor fusion unit.

This enables to make use of a multiple redundancy system between the camera/radar SoC triggering an early frame-rate adjustment + x,y,z, object fusion scheme or an equally redundant camera/radar cube ROIs in the centralized sensor fusion unit in cases of low differentiation capabilities at the SoC between e.g. a person and a car (e.g. triggered by a <90% confidence trigger). As such, a low-level sensor fusion stack enables a 2-level redundancy level for implementing a functional safety aspect for the operation of the car. To note that such a redundancy system differentiates from schemes implementing fully separate processing pipelines for Radar and a Camera data streams processed using, for example, separate processing units, nevertheless utilizing a centralized fusion output at least at 100ms versus other early sensor fusion schemes.

For example, state-of-the-art sensor fusion schemes often rely on a low-level sensor fusion, e.g., fusing raw unprocessed camera-radar data at an early stage. Since the frame-rate of radar is often lower than the frame-rate of the camera, the fused data overall has lower frame-rate which leads to an increased latency in detecting objects. Moreover the computational complexity of processing both high-dimensional radar and high-dimensional camera on the same device is often prohibitive.

An advantage of the aspects disclosed here is, among other benefits, that each sensor data may be individually processed on separate devices. That way the camera detector (which has higher frame rate/lower latency) may act has an early-warning system, which is then complemented by the radar detector, which provides higher accuracy as well as range and velocity information. Such a fusion scheme results in increased mean average precision (mAP) for particular relevant object classification and further early-warning tasks without requiring multiple 10s of TOPs (trillion operations per second) of operation with expensive SoCs. Average precision refers to a metric in measuring the accuracy of object detectors like Faster R-CNN, SSD, etc. Average precision computes the average precision value for recall value over 0 to 1.

The sensor fusion scheme according to aspects of the present disclosure is a combination of supervised and unsupervised machine learning algorithms. In supervised learning, the system learns under supervision, where the supervision signal is named as target value or label. For example, in supervised learning, a goal may be to learn the mapping function, which refers to being able to understand how the input should be matched with output using available data. In unsupervised learning, such signal is not available. For example, clustering is an unsupervised technique where the goal is to find natural groups or clusters in a feature space and interpret the input data. Another example for unsupervised machine learning may refer to dimensionality reduction where the goal is to reduce the number of random variables under consideration.

The radar sensor used here may be a high-resolution radar, which provides a whole 3D (azimuth-range-velocity) data cube. Since processing this high-dimensional cube can be expensive, radar data may be processed first independently from image data. The radar processing pipeline extracts relevant information from the 3D cube, and outputs one or more 3D bounding boxes, as well as radar features.

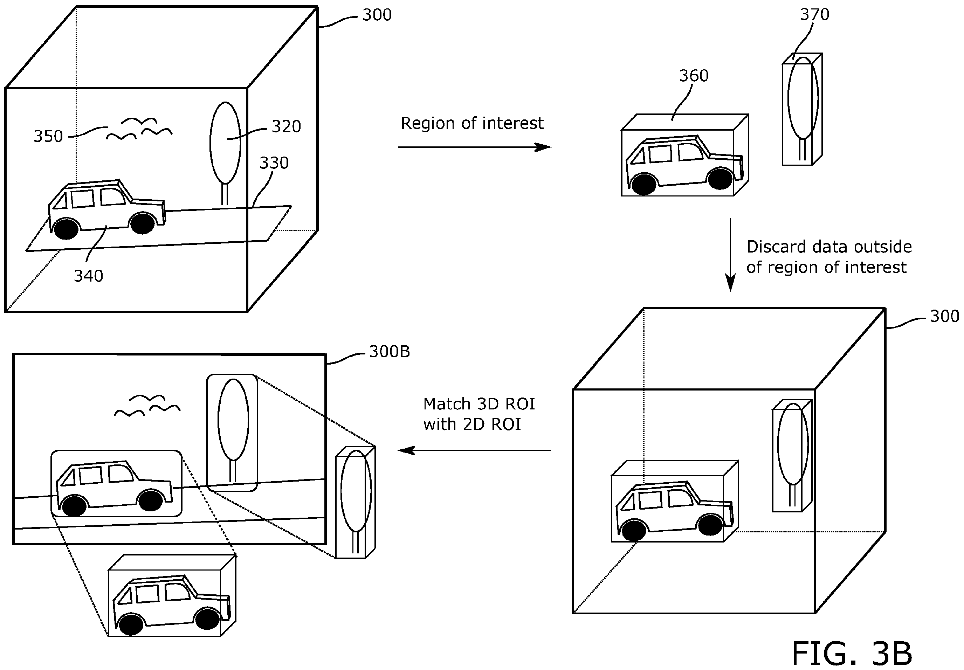

An example of this process is described with regard to Figs. 3A and 3B.

According to Fig. 3A, a 3D data cube 300 output from a radar sensor stream is shown. The radar cube 300 is processed in order to extract ROIs. Detecting ROIs on the high-dimensional 3D cube can be an extremely computationally expensive step. To avoid any computational bottleneck, relevant 3D points are extracted from the 3D data cube, which acts as a data reduction step.

As can be seen in Fig. 3A, the 3D data cube 300 includes multiple objects, including a tree 320, a street 330, a car 340 and a flock of birds 350. These objects are merely examples and other objects may be in the 3D data cube, as discussed with regard to Figs. 1 and 2.

After extraction of the point cloud 305, a preselection occurs and a subset of objections is added to the point cloud 305. As can be seen, the street 330 is not added to the point cloud, however, one of skill in the art will appreciate that other objects may be added or omitted by transferring data to the point cloud 305.

The point cloud 305 extraction operation may be performed using a lightweight local maxima detector. Local maxima detector in radar data may be done using a Constant-False-Alarm-Rate (CFAR) algorithm, or other 2D or 3D filter-based algorithms using different kind of kernels, which can be prohibitively expensive. CFAR is typically done on 2D range-Doppler maps, the azimuth information being then computed using an additional Direction-of-Arrival (DOA) estimation step. However, this may lead to missed or incorrect detections when several targets are in the same range-Doppler bin.

To overcome the limitations of 2D-CFAR, the aspects of the present disclosure may use a custom lightweight 3D CFAR algorithm that directly returns 3D points from the 3D data cube 300. The algorithm compares one or more cells with the statistics of all cells in each dimension, without relying on an expensive 3D filtering operation.

The resulting point cloud 305 may then be clustered as can be seen on the right side of Fig. 3A, in order to identify high-density regions which are identified as regions of interest (ROIs). According to an aspect, aspects disclosed herein may use DBSCAN as a clustering scheme, since it is fast and efficient, can cluster objects of arbitrarily large shapes, and is robust to outliers (i.e. noise and/or clutter points).

Clusters may then be identified as a ROI, and outliers are discarded. Once an ROI has been detected, corresponding small 3D cubes, such as 3D cubes 360 and 370 for the car 340 and the tree 320, respectively, are extracted (not just the point cloud 305). The rest of the (non-ROI) data may discarded, as can be seen in Fig. 3B.

Using 3D cubes rather than point clouds provides, among other benefits, significant improvements for road-user detection and classification. However, unlike existing systems that use a deep convolutional-based approach for object classification after the ROI detection operation, which is not suitable for real-time inference, aspects disclosed herein provide a lightweight 3D cube classification. For example, ROI cubes 360 and 370 may be classified as either "car", "pedestrian", "truck", "bicycle", or "background", where "background" are objects that have been detected but do not correspond to road-users (such as walls, trees or other static objects).

This allows for the removal of false positives that have been detected in the ROI detection operation. For classification, a support vector machine (SVM), a supervised learning algorithm which is computationally less expensive than deep learning algorithms may be used. For each ROI cube 360, 370, custom features such as spatial shape, Radar Cross-Section (RCS), mean velocity, variance of velocity etc. may be computed. The classifier then returns a label corresponding to each class.

The processed radar sensor data may then be used for fusion with camera sensor data. For image-based detection, Yolo, a deep learning-based image detection algorithm may be used to detect objects on an image captured by a camera. The Yolo algorithm is known for relatively low computational time compared to other algorithms. The algorithm returns a list of 2D image bounding boxes, as well as a detection confidence for each bounding box, and a classification confidence for each class.

This is illustrated in Fig. 3B, where the same scenario as from the radar sensor is captured by a camera sensor and output as image 300B. To fuse radar objects, such as objects 360 and 370 with image objects, the radar 3D bounding boxes 360 and 370 are projected onto the image 300B. This may be done after careful calibration of the camera/radar system, and estimation of the camera intrinsic and extrinsic. The pixel width of each projected radar bounding box may be estimated using the ROI azimuth width. The pixel height may be estimated by assuming that each object may be at ground level and may have a fixed height of 1.8m.

The first step of the fusion pipeline may be to match radar bounding boxes with camera bounding boxes. For that, the Intersection-Over-Union (IOU) may be computed between each radar/image bounding box pair, resulting in a matrix of pairwise IOUs.

It may be determined that a pair is a match, e.g., is coming from the same object, if the IOU is greater than a certain threshold. If a pair matching is ambiguous (e.g., a radar object being a potential match with many different image objects), a custom greedy algorithm may be used to identify the combination of pairs leading to the maximum sum of IOUs. The algorithm takes the pairwise IOU matrix as input and finds the optimal permutation matrix, e.g., the matrix such that each row/column has at most 1 non-zero element, and the sum of all elements is maximized.

Once a matched pair of radar/image bounding boxes is identified, the resulting fused object may be classified using features computed from both sensors. In this regard, the output from the last layer of the image detector may be used as image feature, which is concatenated with the radar features as described above. In particular, the features from radar (such as range and velocity) help resolve some cases where the camera-only system struggles to classify a target, for example for (partially) occluded objects, or in general by using the additional range and velocity information. For example, some micro-doppler features may help to identify and classify objects with many moving parts such as pedestrians or bicycles.

An SVM may be used as a lightweight classification algorithm. The overall fusion algorithm results in increased detection and classification performance, compared with camera-only algorithms, as well as providing essential range and velocity information for each detected object.

Further time-of-interest (TOI) models utilizing an early fusion scheme outputting ROI coefficients can be run on combined information from various devices. For example, information of combined radar/camera features may be used to distinguish a person from a car in an overtake maneuver, as such relying on such a low-level and low-latency stack for proper operation. Such a TOI model can be further trained based on reduced coefficients obtained from both the Radar and Camera 3D cubes coefficients and the output of an SVM based fusion scheme while maintaining both low-latency and low RAM requirements. This sensor fusion model can also be used as a pre-labeling stack for radar and/or camera data, which is highly demanded for the development of safe and reliable autonomous systems.

The aspects disclosed herein may be deployed in a variety of multi-sensor applications such as Advance Driver Assistance Systems (ADAS), Autonomous Driving (AD), Robotics, Augmented Reality (AR) or Unmanned Aerial Vehicles (UAV).

In examples, the ROI scheme allows to extract relevant information, thus reducing the latency and data transmission rate to the sensor fusion module, without trading-off accuracy and detection rates. Furthermore, various early alert functions such as overtake detectors rely on features captured by Radar and Camera data streams, as such rely on an early and reliable identification of agents on the road such as a pedestrian to avoid and to trigger an overtake scheme valid for a pedestrian. Moreover, a centralized fusion scheme with access to the raw Radar stream is prohibitive as the incurred bandwidth requirements can easily surpass the 10Gbit requirements, as such disabling the access to the data streams required for improved precision/recall values, thus requiring on the described low-level radar/camera fusion scheme.

Fig. 4 is a flow diagram for an exemplary method 400 of performing sensor data processing. A general order of the operations for the method 400 is shown in Fig. 4. The method 400 may include more or fewer steps or may arrange the order of the steps differently than those shown in Fig. 4. The method 400 can be executed as a set of computer-executable instructions executed by a computer system and encoded or stored on a computer readable medium. Further, the method 400 can be performed by gates or circuits associated with a processor, an ASIC, an FPGA, a SOC or other hardware device. The processing may be performed by a computer. In step S410, a first data stream is received from a radar sensor. The first data stream comprises a 3D data cube, where a point in the 3D data cube 300 may include azimuth, range and velocity dimensions, as described above.

In step S420, a point cloud may be formed by extracting 3D points from the 3D data cube. As discussed herein, forming of the point cloud by extracting 3D points from the 3D data cube may be performed by using a lightweight local maximum detector comprising a 3D Constant-False-Alarm-Rate, CFAR, algorithm that directly returns 3D points from the 3D data cube.

After the point cloud is extracted, clustering is performed in step S430. The clustering is performed on the point cloud in order to identify high-density regions representing one or more ROIs. Various processes for performing clustering have been disclosed herein, however, one of skill in the art will appreciate that other processes for performing clustering can be employed without departing from the scope of this disclosure.

At step S440 one or more 3D bounding boxes, such as bounding boxes 360 and 370 are extracted from the 3D data cube 300 corresponding to the one or more ROIs and each ROI is classified. Data of the 3D data cube that is not included in the one or more 3D bounding boxes is discarded in this step. Various processes for identifying, generating, and/or extracting bounding boxes have been disclosed herein, however, one of skill in the art will appreciate that other processes for can be employed without departing from the scope of this disclosure.

Fig. 5 is a flow diagram for a method of performing sensor fusion with another sensor. This method may be performed following the method 400 as described in Fig. 4. A general order of the operations for the method 500 is shown in Fig. 5. The method 500 may include more or fewer steps or may arrange the order of the steps differently than those shown in Fig. 5. The method 500 can be executed as a set of computer-executable instructions executed by a computer system and encoded or stored on a computer readable medium. Further, the method 500 can be performed by gates or circuits associated with a processor, an ASIC, an FPGA, a SOC or other hardware device. The method 500 starts with receiving a second data stream from the camera sensor in step S510. The second data stream comprises an image including pixel values from the camera sensor.

At step S520 objects within the image are detected one or more 2D bounding boxes for one or more detected objects are determined. An example of the object detection is shown in Fig. 3B, where multiple objects in the image 300B are provided with 2D bounding boxes. While specific examples of object detection have been disclosed herein, one of skill in the art will appreciate that other processes for object detection may be employed with the aspects disclosed herein.

At step S530, one or more 3D bounding boxes from the 3D data cube are projected onto the image, as discussed above and can be seen in Fig. 3B. While specific processes for projecting bounding boxes have been disclosed herein, one of skill in the art will appreciate that other processes can be employed without departing from the scope of the disclosure.

Then, the 3D bounding boxes are matched with the 2D bounding boxes in step S540. For this matching, an intersection over union (IOU) algorithm may be used. While specific processes for matching have been disclosed herein, one of skill in the art will appreciate that other processes can be employed without departing from the scope of the disclosure.

Aspects disclosed herein provides an improved camera/radar sensor fusion, with application to road user detection in the context of Autonomous Driving/Assisted Driving (ADAS), reducing the latency and data transmission rate to the sensor fusion module, without trading-off accuracy and detection rates.

Figure 6 shows various detection metrics for the proposed radar object detector according to embodiments, such as accuracy, precision, recall and f1 score. These radar detections may be fed to the sensor fusion module to further improve the performance. According to aspects disclosed herein, feeding these radar detections into the sensor fusion module may be part of a feedback loop for training the model. For example, objects with low detection or classification confidence may be sent to a remote server for model re-training, in order to improve the model performance. That way, future occurrences of similar objects may have higher detection or classification accuracy.

FIG. 6 illustrates a simplified block diagram of a device with which aspects of the present disclosure may be practiced in accordance with aspects of the present disclosure. The device may be a server computer, a mobile computing device, or a set-top-box, for example. One or more of the present embodiments may be implemented in an operating environment 600. This is only one example of a suitable operating environment and is not intended to suggest any limitation as to the scope of use or functionality. Other well-known computing systems, environments, and/or configurations that may be suitable for use include, but are not limited to, personal computers, server computers, hand-held or laptop devices, multiprocessor systems, microprocessor-based systems, programmable consumer electronics such as smartphones, network PCs, minicomputers, mainframe computers, distributed computing environments that include any of the above systems or devices, and the like.

In its most basic configuration, the operating environment 600 typically includes at least one processing unit 602 and memory 604. Depending on the exact configuration and type of computing device, memory 604 (instructions for processing data streams from one or more sensors as disclosed herein) may be volatile (such as RAM), non-volatile (such as ROM, flash memory, etc.), or some combination of the two. This most basic configuration is illustrated in FIG. 6 by dashed line 606. Further, the operating environment 600 may also include storage devices (removable, 608, and/or non-removable, 610) including, but not limited to, magnetic or optical disks or tape. In some aspects, the removable storage 608 includes a subscriber card (e.g., a smart card and a subscriber identification module (SIM) card). Similarly, the operating environment 600 may also have input device(s) 614 such as remote controller, keyboard, mouse, pen, voice input, on-board sensors, etc. and/or output device(s) 616 such as a display, speakers, printer, motors, etc. Also included in the environment may be one or more communication connections, 612, such as LAN, WAN, a near-field communications network, a cellular broadband network, point to point, etc.

Operating environment 600 typically includes at least some form of computer readable media. Computer readable media can be any available media that can be accessed by processing unit 602 or other devices comprising the operating environment. By way of example, and not limitation, computer readable media may comprise computer storage media and communication media. Computer storage media includes volatile and nonvolatile, removable and non-removable non-transitory media implemented in any method or technology for storage of information such as computer readable instructions, data structures, program modules or other data. Computer storage media includes, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other tangible, non-transitory medium which can be used to store the desired information. Computer storage media does not include communication media. Computer storage media does not include a carrier wave or other propagated or modulated data signal.

Communication media embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media.

The operating environment 600 may be a single computer operating in a networked environment using logical connections to one or more remote computers. The remote computer may be a personal computer, a server, a router, a network PC, a peer device or other common network node, and typically includes many or all of the elements described above as well as others not so mentioned. The logical connections may include any method supported by available communications media. Such networking environments are commonplace in offices, enterprise-wide computer networks, intranets and the Internet.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, for example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the spirit of the broader aspects of the general inventive concept embodied in this application that do not depart from the broader scope of the claimed disclosure.

## Claims

1. A computer-implemented method for sensor data stream processing, the method comprising:
receiving (S410) a first data stream from a radar sensor, wherein the first data stream comprises a 3D data cube (300) including azimuth, range and velocity dimensions;
forming (S420) a point cloud (305) by extracting 3D points from the 3D data cube;
performing (S430) clustering on the point cloud in order to identify high-density regions representing one or more regions of interest, ROIs; and
extracting (S440) one or more 3D bounding boxes (360, 370) from the 3D data cube corresponding to the one or more ROIs and classifying the one or more ROIs, wherein data of the 3D data cube that is not included in the one or more 3D bounding boxes is discarded.

2. The computer-implemented method of claim 1, wherein the method further comprises performing sensor fusion with a camera sensor, and wherein the method further comprises:
receiving (S510) a second data stream from the camera sensor, wherein the second data stream comprises an image including pixel values from the camera sensor;
detecting (S520) objects within the image and determining one or more 2D bounding boxes for each detected object;
projecting (S530) the one or more 3D bounding boxes from the 3D data cube onto the image; and
matching (S540) said one or more 3D bounding boxes with said one or more 2D bounding boxes.

3. The computer-implemented method of claim 2, further comprising:
classifying a fused object once a matched pair of 2D and 3D bounding boxes is identified, wherein classifying uses features computed from the radar sensor and the camera sensor.

4. The computer-implemented method of claim 2, wherein said matching comprises computing an Intersection-Over-Union, IOU, between each 2D/3D bounding box pair, resulting in a matrix of pairwise IOUs, wherein a pair is a match if the IOU corresponding to the pair is greater than a threshold.

5. The computer-implemented method of any one of claims 1 to 4, wherein forming of the point cloud by extracting 3D points from the 3D data cube is performed by using a lightweight local maximum detector comprising a custom 3D Constant-False-Alarm-Rate, CFAR, algorithm that directly returns 3D points from the 3D data cube.

6. The computer-implemented method of claim 1, wherein classifying the one or more ROIs comprises:
for the one or more 3D bounding boxes, computing custom features utilizing a support vector machine, SVM, wherein said custom features comprise at least one of spatial shape, radar cross section, RCS, mean velocity and variance of velocity.

7. The computer-implemented method of any one of claims 2 to 6, wherein information from sensor fusion is used for running time of interest, TOI, models relying on low latency sensor data processing.

8. A computer-readable medium comprising computer-readable instructions, that, when executed by a processor, cause the processor to perform a method according to any one of claims 1 to 7.

9. A sensor data processing system comprising a processing unit and a radar sensor, the processing unit being configured to:
receive (S410) a first data stream from a radar sensor, wherein the first data stream comprises a 3D data cube including azimuth, range and velocity dimensions;
form (S420) a point cloud by extracting 3D points from the 3D data cube;
perform clustering (S430) on the point cloud in order to identify high-density regions representing one or more regions of interest, ROIs; and
extract (S440) one or more 3D bounding boxes from the 3D data cube corresponding to the one or more ROIs and classify each ROI, wherein data of the 3D data cube that is not included in the one or more 3D bounding boxes is discarded.

10. The sensor data processing system of claim 9, wherein the processing unit being further configured to perform sensor fusion with a camera sensor, by:
receiving (S510) a second data stream from the camera sensor, wherein the second data stream comprises an image including pixel values from the camera sensor;
detecting (S520) objects within the image and determining one or more 2D bounding boxes for each detected object;
projecting (S530) the one or more 3D bounding boxes from the 3D data cube onto the image; and
matching (S540) said one or more 3D bounding boxes with said one or more 2D bounding boxes.

11. The sensor data processing system of claim 10, wherein the processing unit being further configured to:
classify a fused object once a matched pair of 2D and 3D bounding boxes is identified, wherein classifying uses features computed from the radar sensor and the camera sensor.

12. The sensor data processing system of claim 10, wherein matching comprises computing an Intersection-Over-Union, IOU, between each 2D/3D bounding box pair, resulting in a matrix of pairwise IOUs, wherein a pair is a match if the IOU corresponding to the pair is greater than a threshold.

13. The sensor data processing system of any one of claims 9 to 13, wherein forming of the point cloud by extracting 3D points from the 3D data cube is performed by using a lightweight local maximum detector comprising a custom 3D Constant-False-Alarm-Rate, CFAR, algorithm that directly returns 3D points from the 3D data cube.

14. The sensor data processing system of any one of claims 9 to 13, wherein classifying the one or more ROIs comprises:
for the one or more 3D bounding boxes, computing custom features utilizing a support vector machine, SVM, wherein said custom features comprise at least one of spatial shape, radar cross section (RCS) mean velocity and variance of velocity.

15. The sensor data processing system of any one of claims 9 to 14, wherein information from sensor fusion is used for running time of interest, TOI, models relying on low latency sensor data processing.
